# FASCICULE DE BREVET EUROPEEN

(11) **EP 2 791 080 B1**
(45) Date de publication et mention de la délivrance du brevet: **27.02.2019**
(21) Numéro de dépôt: 12806552.1
(22) Date de dépôt: 22.11.2012
(51) Int. Cl.: C04B 35/563, C04B 35/565, C04B 35/80, B82Y 30/00

(54) **PIÈCE EN MATÉRIAU CMC**
TEIL AUS CMC
PART MADE OF CMC

(30) Priorité: 13.12.2011 FR 1161522
(43) Date de publication de la demande: 22.10.2014
(73) Titulaire: Safran Ceramics, 33185 Le Haillan (FR); Centre National de la Recherche Scientifique (C.N.R.S.), 75016 Paris (FR)
(72) Inventeur: LAMOUROUX, Franck, 33320 Le Taillan Medoc (FR); BERTRAND, Sébastien, 33480 Moulis En Medoc (FR); JACQUES, Sylvain, 33400 Talence (FR); LOUCHET, Caroline, 33460 Arsac (FR)
(74) Mandataire: Laïk, Eric
(86) Numéro de dépôt international: PCT/FR2012/052702
(87) Numéro de publication internationale: WO 2013/088015

(56) Documents cités:
- FR-A1- 2 710 635
- US-A- 5 284 685
- BERTRAND S ET AL: "Influence of strong fiber/coating interfaces on the mechanical behavior and lifetime of Hi-Nicalon/(PyC/SiC)n/SiC minicomposites", JOURNAL OF THE AMERICAN CERAMIC SOCIETY, BLACKWELL PUBLISHING, MALDEN, MA, US, vol. 84, no. 4, 1 avril 2001 (2001-04-01), pages 787-794, XP008152205, ISSN: 0002-7820, DOI: 10.1111/J.1151-2916.2001.TB00742.X [extrait le 2004-12-20]
- NASLAIN R ET AL: "Processing of ceramic matrix composites by pulsed-CVI and related techniques", KEY ENGINEERING MATERIALS, TRANS TECH PUBLICATIONS LTD., STAFA-ZURICH, CH, vol. 159-160, 1 janvier 1999 (1999-01-01), pages 359-365, XP008152202, ISSN: 1013-9826, DOI: 10.4028/WWW.SCIENTIFIC.NET/KEM.159-160.359
- NOZAWA T ET AL: "Tensile, flexural, and shear properties of neutron irradiated SiC/SiC composites with different fiber-matrix interfaces", STP / ASTM INTERNATIONAL, ASTM INTERNATIONAL -WEST CONSHOHOCKEN, PA., 2001-, US, vol. 1475 STP, 1 janvier 2004 (2004-01-01) , pages 392-404, XP008152200, ISSN: 1040-1695
- HINOKI T ET AL: "The effect of neutron-irradiation on the shear properties of SiC/SiC composites with varied interface", JOURNAL OF NUCLEAR MATERIALS, vol. 283, 2000, pages 376-379, XP028142646, ISSN: 0022-3115, DOI: 10.1016/S0022-3115(00)00279-8 [retrieved on 2011-02-15]

## Description

### Arrière-plan de l'invention

L'invention concerne des pièces en matériau composite à matrice céramique ou CMC.

Par pièce en matériau CMC, on entend ici une pièce en un matériau comprenant un renfort fibreux en fibres de carbone ou de céramique densifié par une matrice au moins majoritairement en céramique.

Les matériaux CMC sont utilisés dans diverses applications, notamment dans les domaines aéronautique et spatial, où sont exploitées leurs propriétés thermostructurales, c'est-à-dire leur capacité à constituer des éléments de structure en raison de leur tenue mécanique, notamment en flexion, en traction et aux chocs, bien supérieure à celle des céramiques massives, et leur capacité à conserver cette tenue mécanique jusqu'à des températures élevées bien supérieures à 1 000°C.

Dans les matériaux CMC, la fissuration de la matrice est en pratique inévitable, souvent dès la fabrication.

Il a été proposé d'interposer entre les fibres et la matrice un revêtement d'interphase qui est capable d'assurer un transfert de charges efficace entre la matrice et les fibres et qui est en un matériau capable de dévier des fissures parvenant au revêtement d'interphase pour éviter que des fissures se propageant dans la matrice atteignent les fibres du renfort et provoquent la rupture de celles-ci, dégradant rapidement les propriétés mécaniques du matériau CMC. Les documents US 4 752 503 et US 5 026 604 divulguent la réalisation d'une interphase en carbone pyrolytique (PyC) ou nitrure de bore (BN) ayant une structure lamellaire ou en feuillets. La réalisation d'une interphase déviatrice de fissure en matériau poreux est également connue.

Toutefois, dans des conditions d'utilisation sous atmosphère oxydante et à température élevée, la propagation des fissures jusqu'à l'interphase offre des voies d'accès à l'oxygène, et il se produit alors une oxydation de l'interphase PyC ou BN, voire des fibres sous-jacentes lorsqu'elles sont en carbone, conduisant à une dégradation du matériau CMC.

Une première approche connue pour améliorer la tenue à l'oxydation consiste à réaliser une interphase séquencée en alternant des couches nanométriques en matériau déviateur de fissures, tel que PyC ou BN, avec des couches nanométriques en matériau ayant une fonction de protection contre l'oxydation, notamment un matériau tel que du carbure de silicium (SiC) ou un ternaire Si-B-C capable de former en présence d'oxygène un composé vitreux pouvant cicatriser des fissures par passage à l'état pâteux aux hautes températures auxquelles le matériau CMC est exposé. On pourra se référer au document US 5 738 951 qui décrit, pour un matériau composite à matrice SiC, la formation d'une telle interphase séquencée par infiltration chimique en phase gazeuse en mode pulsé, ou P-CVI (pour "Pulsed-Chemical Vapour Infiltration"), les couches élémentaires de l'interphase ayant une épaisseur inférieure à 10 nm.

La formation par P-CVI d'interphases séquencées de type (PyC-SiC)ₙ est décrite aussi dans les documents de Sébastien BERTRAND ET AL. : "Influence of strong fiber/coating interfaces on the mechanical behavior and lifetime of Hi-Nicalon/(PyC-SiC)n/SiC minicomposites", Journal of the American Ceramic Society, Blackwell Publishing, MALDEN, MA, US, vol. 84, N° 4, 1er avril 2011 (2001-04-01), pages 787-794, et de Roger NASLAIN ET AL. : "Processing of ceramic matrix composites by pulsed-CVI and related techniques", Key Engineering Materials, Trans Tech Publications Ltd., STAFA-ZURICH, CH, Vol. 159-160, 1er janvier 1999 (1999-01-01), pages 359-365.

Dans ces deux documents, les composites présentés sont des mini-composites ou micro-composites à renfort unidirectionnel.

Le document de Takashi NOZAWA ET AL. : "Tensile, flexural, and shear properties of neutron irradiated SiC/SiC composites with différent fiber-matrix interfaces", STP/ASTM International, ASTM International, WEST CONSHOHOCKEN, PA., 2001, US, Vol. 1475 STP, 1er janvier 2004 (2004-01-01), pages 392-404, mentionne aussi des mini-composites à renfort fibreux unidirectionnel et matrice SiC, avec interphase de type (SiC-PyC)ₙ, les composites ayant été réalisés par processus CVI isotherme, sans autre précision.

Une deuxième approche connue consiste à incorporer à la matrice une ou plusieurs phases en un matériau capable de conférer des propriétés auto-cicatrisantes à la matrice afin d'éviter ou ralentir la propagation de fissures au sein de la matrice, de telles phases étant notamment en carbure de bore B₄C ou en un système ternaire Si-B-C. On pourra se référer au document US 5 965 266 qui décrit une matrice comprenant des phases en SiC alternant avec des phases B₄C ou Si-B-C.

Une troisième approche connue consiste à réaliser une matrice séquencée comprenant des couches en matériau déviateur de fissures, par exemple PyC ou BN, alternant avec des couches en matériau céramique, la déviation des fissures au sein de la matrice retardant l'accès d'un milieu oxydant ambiant à l'interphase ou aux fibres. On pourra se référer au document US 6 068 930.

Une quatrième approche connue consiste à réaliser une interphase PyC ou BN peu anisotrope pour permettre une liaison forte avec une matrice ou une couche de matrice céramique, notamment SiC, de sorte que les résistances à la rupture par cisaillement au sein de la couche d'interphase et au niveau des liaisons fibres-interphase et interphase-matrice sont supérieures à celles rencontrées au sein de la matrice.

On connait en outre la publication Hinoki et *al.* (« The effect of neutron-irradiation on the shear properties of SiC/SiC composites with varied interface") qui divulgue une pièce en matériau composite à matrice SiC comprenant un renfort fibreux de fibres de SiC revêtu par un revêtement comprenant du PyC ou SiC. Il n'est pas décrit de revêtement d'interphase présentant, sur sa surface externe, des grains céramique dont la taille est comprise essentiellement entre 20 nanomètres et 200 nanomètres, avec présence de grains de taille supérieure à 50 nanomètres.

On connait en outre le document US 5 284 685 qui divulgue une pièce en matériau composite à matrice de carbone dopé par du SiC. Les fibres du renfort sont revêtues par un revêtement PyC/SiC puis la préforme est densifiée par la matrice de carbone dopé SiC. L'emploi de méthane est indiqué pour former le PyC. On ne retrouve toutefois pas de matrice séquencée majoritairement en céramique comportant des couches de matrice en matériau déviateur de fissure alternant avec des couches de matrice en matériau céramique, ni de revêtement d'interphase formé de couches en carbone dopé au bore alternant avec des couches en SiC.

### Objet et résumé de l'invention

L'invention a pour but de proposer une pièce en matériau CMC ayant une durée de vie améliorée, notamment lors d'exposition sous charge en milieu oxydant à température élevée.

Ce but est atteint grâce à une pièce selon la revendication 1.

L'accrochage de la matrice séquencée sur le revêtement d'interphase favorise le transfert de charge entre la matrice et les fibres, ce qui est important du point de vue de la tenue mécanique de la pièce et de sa durée de vie en environnement oxydant. De préférence, la liaison entre le revêtement d'interphase et la matrice présente une résistance à la rupture en cisaillement supérieure à celles rencontrées au sein de la matrice. Avantageusement, l'endommagement par fissuration est reporté au sein de la matrice séquencée et non pas de façon privilégiée au niveau de l'interphase. Du fait du séquençage de la matrice, cet endommagement se produit par une combinaison de mode I (fissuration se propageant transversalement dans une couche de matrice céramique) et de mode II (fissuration se propageant le long d'une couche en matériau déviateur de fissure), ce qui retarde l'exposition du revêtement d'interphase à l'oxygène du milieu ambiant via le réseau de fissuration. La durée de vie de la pièce est ainsi augmentée.

La couche de matrice située au plus près du revêtement d'interphase est une couche en matériau déviateur de fissures PyC ou BC.

Le revêtement d'interphase est formé de premières couches élémentaires en carbone dopé au bore alternant avec des deuxièmes couches élémentaires en céramique et le pourcentage atomique de bore est compris entre 5% et 20% dans chaque première couche élémentaire, chaque deuxième couche élémentaire du revêtement d'interphase étant en carbure de silicium.

Chaque première couche élémentaire du revêtement d'interphase peut avoir une épaisseur moyenne comprise entre 20 nanomètres et 500 nanomètres.

Chaque deuxième couche élémentaire du revêtement d'interphase peut avoir une épaisseur moyenne comprise entre 20 nanomètres et 500 nanomètres.

L'épaisseur totale moyenne du revêtement d'interphase peut être comprise entre 0,10 micromètres et 4 micromètres, en valeur moyenne.

L'invention vise également un procédé selon la revendication 5.

Chaque première couche élémentaire du revêtement d'interphase est formée à partir d'une phase gazeuse dans laquelle le précurseur de carbone est du propane.

Le brevet décrit encore un procédé dans lequel la ou chaque première couche élémentaire du revêtement d'interphase est formée à partir d'une phase gazeuse dans laquelle le précurseur de carbone est du méthane ou du gaz naturel, la première couche élémentaire étant en carbone seul.

Avantageusement, on réalise une consolidation de la préforme fibreuse par le revêtement d'interphase, c'est-à-dire que le revêtement d'interphase lie les fibres de la préforme de sorte que la préforme est suffisamment rigide pour pouvoir être manipulée en conservant sa forme sans l'assistance d'un outillage de maintien.

### Brève description des dessins

D'autres particularités et avantages de l'invention ressortiront à la lecture de la description faite ci-après, à titre indicatif mais non limitatif, en référence aux dessins annexés sur lesquels :
- les figures 1 à 3 sont des vues au microscope montrant des revêtements d'interphases pour des pièces en matériau CMC conformes à l'invention ;
- la figure 4 est une vue au microscope montrant un revêtement d'interphase pour une pièce en matériau CMC hors invention ;
- les figures 5 à 9 sont des vues au microscope montrant des revêtements d'interphase de pièces en matériau CMC réalisées à titre comparatif ; et
- la figure 10 montre des courbes représentant la relation entre contrainte en traction et déformation pour différentes pièces en matériau CMC.

### Description détaillée de l'invention

Une première étape de réalisation d'une pièce en matériau CMC conforme à l'invention consiste à réaliser une préforme fibreuse destinée à constituer le renfort fibreux de la pièce à réaliser et ayant donc une forme correspondant à celle de cette pièce.

La préforme est réalisée en fibres de carbone ou de céramique, les fibres étant par exemple à base de carbure de silicium SiC lorsqu'il s'agit de fibres céramique.

Divers procédés d'élaboration de préformes fibreuses sont bien connus.

Des préformes peuvent être réalisées à partir de structures fibreuses unidimensionnelles telles que des fils, câbles ou mèches, par exemple par enroulement filamentaire ou tissage multicouches (ou tissage tridimensionnel) éventuellement suivi d'une étape de mise en forme.

Il est possible aussi de partir de structures fibreuses bidimensionnelles telles que des tissus bidimensionnels ou des nappes de fils ou de câbles pour former des strates qui sont drapées sur une forme et éventuellement liées entre elles par exemple par aiguilletage, couture ou implantation de fils.

Il est possible aussi de partir de structures fibreuses tridimensionnelles telles que des feutres.

Dans tous les cas, une préforme de forme complexe peut être réalisée par assemblage, par exemple par couture, des différentes parties de préforme.

Dans tous les cas également, la préforme peut être réalisée en fibres en un polymère précurseur de carbone ou de céramique, avec transformation ultérieure du précurseur en carbone ou en céramique par traitement thermique.

Une deuxième étape consiste à former sur les fibres de la préforme un revêtement d'interphase avec la préforme généralement maintenue dans sa forme au moyen d'un outillage. Le revêtement d'interphase est un revêtement multicouches formé par processus classique d'infiltration chimique en phase gazeuse ou CVI ("Chemical Vapor Infiltration"). Les processus CVI sont bien connus. Ils consistent à placer une préforme poreuse dans une enceinte dans laquelle est admise une phase gazeuse réactionnelle qui, dans des conditions notamment de température et de pression données, diffuse au sein de la porosité de la préforme pour former, au contact de celle-ci, un dépôt du matériau souhaité par décomposition d'un ou plusieurs constituants de la phase gazeuse ou par réaction entre plusieurs constituants de celle-ci.

De façon connue, dans un processus CVI classique, la phase gazeuse s'écoule de façon continue dans l'enceinte qui est maintenue à pression constante ou sensiblement constante (processus CVI isobare ou quasi-isobare).

Dans la présente invention, le revêtement d'interphase est formé de premières couches élémentaires en carbone dopé au bore alternant avec des deuxièmes couches élémentaires en céramique, chaque deuxième couche élémentaire du revêtement d'interphase étant en carbure de silicium.

Le brevet décrit encore le cas où une première couche élémentaire du revêtement d'interphase formée uniquement de carbone est une couche de carbone pyrolytique (PyC) formée par CVI dans laquelle le précurseur de carbone contenu dans la phase gazeuse réactionnelle est du méthane ou du gaz naturel.

Dans le cas où la première couche élémentaire du revêtement d'interphase est formée uniquement de PyC, le brevet décrit encore un revêtement d'interphase formé par une seule séquence constituée par une couche élémentaire de PyC surmontée d'une couche élémentaire en céramique.

Une première couche élémentaire du revêtement d'interphase formée de carbone dopé au bore (BC) est avantageusement une couche formée par CVI dans laquelle le précurseur gazeux de carbone contenu dans la phase gazeuse réactionnelle est du propane. Le précurseur gazeux de bore contenu dans la phase gazeuse est par exemple du trichlorure de bore BCl₃. Les proportions respectives de précurseur de carbone et de précurseur de bore dans la phase gazeuse réactionnelle sont choisies de manière à avoir un pourcentage atomique de bore entre 5% et 20% dans la couche BC.

Le revêtement d'interphase est multiséquencé, c'est-à-dire formé par une pluralité de premières couches élémentaires BC alternant avec une pluralité de deuxièmes couches élémentaires en carbure de silicium.

Le carbone dopé au bore de chaque première couche élémentaire d'interphase est avantageusement du PyC de microstructure de type laminaire lisse ou rugueux avec un angle d'extinction supérieur à 12°, le type de microstructure étant observable par éclairage sous lumière polarisée faisant notamment apparaître des motifs en forme de "croix de Malte" et l'angle d'extinction étant l'angle de rotation de polarisation provoquant l'extinction du motif, comme cela est bien connu.

Chaque deuxième couche élémentaire en céramique est une couche de carbure de silicium SiC.

Comme cela est bien connu, une couche en SiC peut être formée par CVI en utilisant une phase gazeuse contenant un mélange de méthyltrichlorosilane (MTS) et de gaz hydrogène H₂.

Conformément à l'invention, le revêtement d'interphase est formé de sorte que la couche élémentaire formée en dernier est une couche en céramique dont la surface externe est formée de grains de céramique ayant une taille comprise essentiellement entre 20 nanomètres et 200 nanomètres avec présence de grains de taille supérieure à 50 nanomètres, conférant à cette surface une rugosité relativement forte de manière à permettre un accrochage mécanique de la première couche de matrice. Par taille de grains de céramique comprise essentiellement entre 20 nanomètres et 200 nanomètres, on entend ici que plus de 80% des grains de céramique ont une taille comprise dans cette plage. Par ailleurs, la présence de grains de taille supérieure à 50 nanomètres doit de préférence être significative, c'est-à-dire représenter au moins 20% de la couche en céramique.

L'épaisseur moyenne de chaque première couche élémentaire d'interphase en carbone dopé au bore est de préférence comprise entre 20 nanomètres et 500 nanomètres.

L'épaisseur moyenne de chaque deuxième couche élémentaire d'interphase en carbure de silicium est de préférence comprise entre 20 nanomètres et 500 nanomètres.

L'épaisseur totale moyenne du revêtement d'interphase est de préférence comprise entre 0,10 micromètres et 4 micromètres, en valeur moyenne.

On pourra choisir cette épaisseur totale de manière à assurer la consolidation de la préforme fibreuse par le seul revêtement d'interphase, c'est-à-dire avec un revêtement d'interphase liant entre elles les fibres de la préforme de façon suffisante pour avoir une préforme rigidifiée manipulable tout en conservant sa forme sans l'assistance d'un outillage de maintien.

Avant formation du revêtement d'interphase et pour favoriser un bon accrochage de ce revêtement sur les fibres, la préforme fibreuse peut être traitée thermiquement comme décrit dans le document US 5 476 685 lorsqu'elle est en fibres de carbone ou être traitée chimiquement comme décrit dans le document US 5 071 679, lorsqu'elle est en fibres de céramique, notamment en SiC ou essentiellement en SiC.

La préforme munie du revêtement d'interphase est ensuite densifiée par une matrice séquencée majoritairement en céramique comprenant des couches en céramique alternant avec des couches en matériau déviateur de fissures. Les couches en matériau déviateur de fissures peuvent être en carbone pyrolytique, éventuellement dopé au bore ou en nitrure de bore BN. Les couches en céramique peuvent être en SiC ou en un système ternaire Si-B-C ou en carbure de bore B₄C. Pour les couches en céramique, on pourra alterner entre un matériau réfractaire tel que SiC et un matériau de type autocicatrisant tel que Si-B-C ou B₄C. Par matériau autocicatrisant, on entend un matériau susceptible de générer une phase vitreuse par oxydation, réalisant ainsi une cicatrisation par comblement de fissure.

La matrice séquencée peut être obtenue par CVI. Des processus de réalisation de matrices séquencées sont décrits notamment dans les documents US 5 965 266 et US 6 068 930 déjà cités. Une matrice séquencée comprenant des couches en matériau céramique est particulièrement avantageuse en ce qu'en combinant un mode I de fissuration transversalement aux couches en céramique avec un mode II de fissuration parallèlement aux couches en matériau déviateur de fissure, elle retarde l'exposition du carbone de l'interphase à l'oxygène du milieu ambiant via le réseau de fissuration.

La couche de matrice formée en premier (au plus près du revêtement d'interphase) est une couche en matériau déviateur de fissures PyC ou BC. La rugosité relativement forte de la surface externe de la couche élémentaire de revêtement d'interphase formée en dernier permet un accrochage mécanique entre le revêtement d'interphase et la matrice évitant avantageusement que sous l'effet de contraintes une décohésion se produise préférentiellement à ce niveau, créant un passage pour l'oxygène du milieu ambiant vers le carbone du revêtement d'interphase. En outre, de préférence, la résistance à la rupture en cisaillement de la première couche de la matrice en matériau déviateur de fissures est supérieure à celle existant par ailleurs au sein de la matrice.

En complément avec le mode mixte de fissuration au sein de la matrice séquencée, cela contribue à améliorer la durée de vie du matériau CMC par préservation de l'intégrité de l'interphase. En outre, cet accrochage mécanique entre le revêtement d'interphase et la matrice contribue à assurer un bon transfert de charge de la matrice vers les fibres, ce qui est essentiel pour les propriétés mécaniques du matériau CMC.

Des exemples de réalisation de pièces en matériau CMC selon l'invention seront maintenant décrits ainsi que des exemples comparatifs.

### Exemple 1 (fibres C, interphase (BCₚᵣₒₚₐₙₑ/SiC)x4, matrice type PyC, B₄C, SiC, Si-B-C) (selon l'invention)

Des préformes fibreuses ont été obtenues à partir d'un tissu réalisé par tissage multicouches de fils de carbone. Le tissage a été effectué avec une armure de type interlock de manière à accroître la résistance au délaminage du matériau finalement obtenu. Des préformes ont été obtenues par découpe dans le tissu multicouches obtenu et maintien entre deux plaques perforées d'un conformateur en graphite, de manière à avoir un taux volumique de fibres généralement compris entre 30% et 50% environ (c'est-à-dire le pourcentage du volume apparent de la préforme occupé par les fibres).

Un revêtement d'interphase formé de couches de carbone pyrolytique dopé au bore alternant avec des couches de SiC a été réalisé par CVI classique sur les fibres des préformes. Le revêtement formé de 4 bi-couches BC/SiC est dénommé (BC/SiC)x4.

Le dépôt de chaque couche élémentaire de BC a été réalisé avec une phase gazeuse réactionnelle contenant un mélange de propane C₃H₈ et de trichlorure de bore BCl₃ de manière à obtenir un matériau BC.

Le dépôt de chaque couche élémentaire de SiC a été réalisé avec une phase gazeuse réactionnelle contenant un mélange de MTS et H₂.

Des processus de dépôt de couches BC et SiC par CVI sont décrits notamment dans le document précité US 6 068 930.

Les paramètres de ces processus, notamment la durée de formation de chaque couche élémentaire ont été choisis pour obtenir des épaisseurs moyennes de l'ordre de 50 nanomètres et 100 nanomètres, respectivement pour les couches de BC et de SiC, donnant une épaisseur moyenne d'interphase consolidante de 0,6 micromètres environ. Il est toutefois à noter que ces épaisseurs varient fortement en fonction notamment de l'emplacement par rapport aux trous des plaques perforées du conformateur en graphite, la proximité d'un trou favorisant l'accès de la phase gazeuse réactionnelle, donc la formation d'une couche plus épaisse.

Après formation du revêtement d'interphase, les préformes consolidées par ce revêtement ont été retirées de leur outillage de maintien et densifiées par CVI par une matrice majoritairement en céramique constituée de couches de carbone pyrolytique PyC alternant avec des couches de carbure de bore B₄C ou de carbure de silicium SiC ou de carbure mixte de bore et de silicium formant un système ternaire Si-B-C, les couches formant ainsi la séquence suivante (en partant de la couche de matrice la plus proche de l'interphase) :
C/B₄C/C/SiC/C/Si-B-C/C/SiC (qui peut être répétée une ou plusieurs fois)
les phases C en matériau déviateur de fissure étant en carbone pyrolytique issu de précurseur formé d'un mélange de propane et de gaz naturel,
les phases SiC en céramique réfractaire et les phases Si-B-C et B₄C en céramique autocicatrisante étant obtenues comme décrit dans le document US 5 965 266 précité.

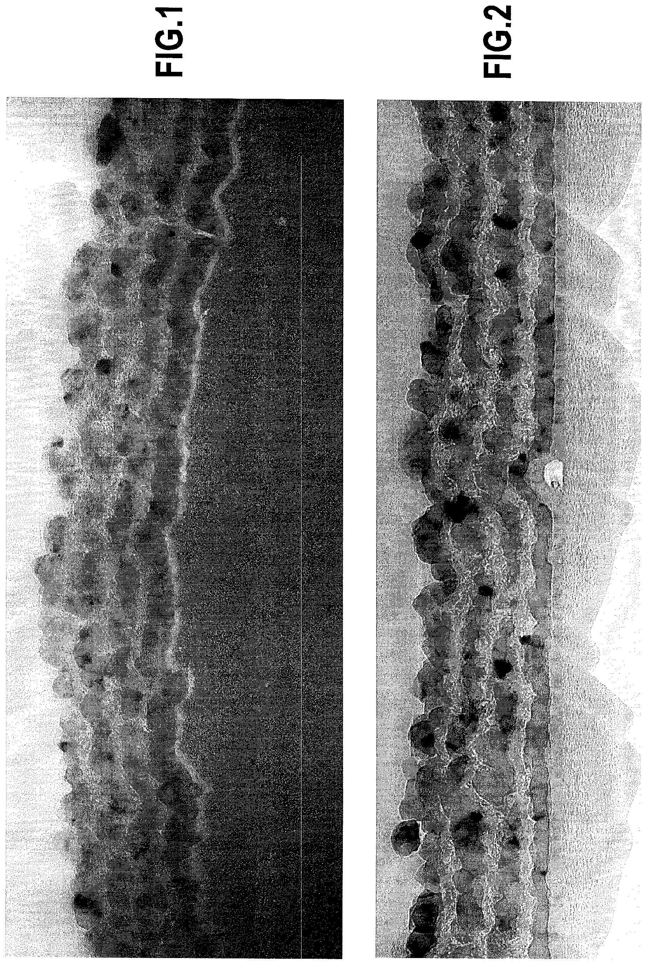

La rugosité de la surface externe de la couche de SiC de revêtement d'interphase formée en dernier apparaît sur les figures 1, 2 et 3 qui sont des vues au microscope du revêtement d'interphase au stade consolidation, avant poursuite de la densification, respectivement en coupe transversale, en coupe longitudinale et en surface. Cette rugosité vient de la formation de cette couche de SiC par des grains de taille moyenne relativement importante, ici supérieure à 50 nanomètres, donc avec présence significative de grains de taille supérieure à 50 nanomètres.

### Exemple 2 (fibres C, interphase (BC_{propane/}SiC)x4, matrice type BC, B₄C, SiC, Si-B-C) (selon l'invention)

Il a été procédé comme dans l'exemple 1 sauf pour la matrice séquencée dans laquelle le carbone pyrolytique PyC des couches déviatrices de fissures est remplacé par du carbone dopé au bore BC de nature semblable à celui du revêtement d'interphase.

### Exemple 3 (fibres C, interphase PyC_{CH₄}/SiC, matrice type PyC, B₄C, SiC, Si-B-C) (hors invention)

Il a été procédé comme dans l'exemple 1 sauf pour le revêtement d'interphase qui était de type PyC/SiC formé d'une couche élémentaire de PyC recouverte d'une couche élémentaire de SiC. La couche élémentaire de PyC a été obtenue par CVI classique avec une phase gazeuse dans laquelle le précurseur de carbone était du gaz naturel, à savoir essentiellement du méthane. Les épaisseurs moyennes visées pour les couches de PyC et de SiC étaient respectivement de l'ordre de 100 nanomètres et 1 micron, suffisantes pour consolider les préformes.

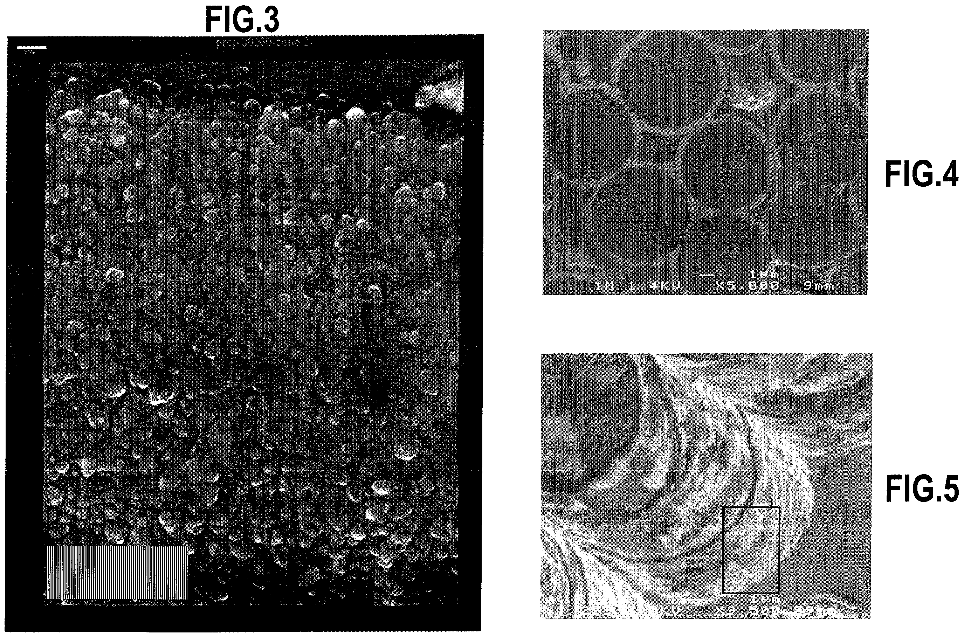

La figure 4 montre que la couche élémentaire de SiC présente en surface une rugosité relativement forte générée par la présence de grains de SiC grossiers de taille supérieure à 50.

### Exemple 4 (comparatif) (fibres C, interphase BC/B₄C/BC/SiC, matrice type BC, B₄C, SiC, Si-B-C)

Il a été procédé comme dans l'exemple 2 sauf pour le revêtement d'interphase qui était de type BC/B₄C/BC/SiC, les couches élémentaires de BC et la couche élémentaire de SiC étant obtenues comme dans l'exemple 2 et la couche élémentaire de B₄C étant obtenue comme pour la matrice.

La figure 5 montre que la surface externe de la couche SiC du revêtement d'interphase est relativement lisse.

### Exemple 5 (comparatif) (fibres C, interphase (BC_{gaz nat}/SiC)x4, matrice type BC, B₄C, SiC, Si-B-C)

Il a été procédé comme dans l'exemple 2 en remplaçant le précurseur de carbone pour les premières couches du revêtement d'interphase par du gaz naturel.

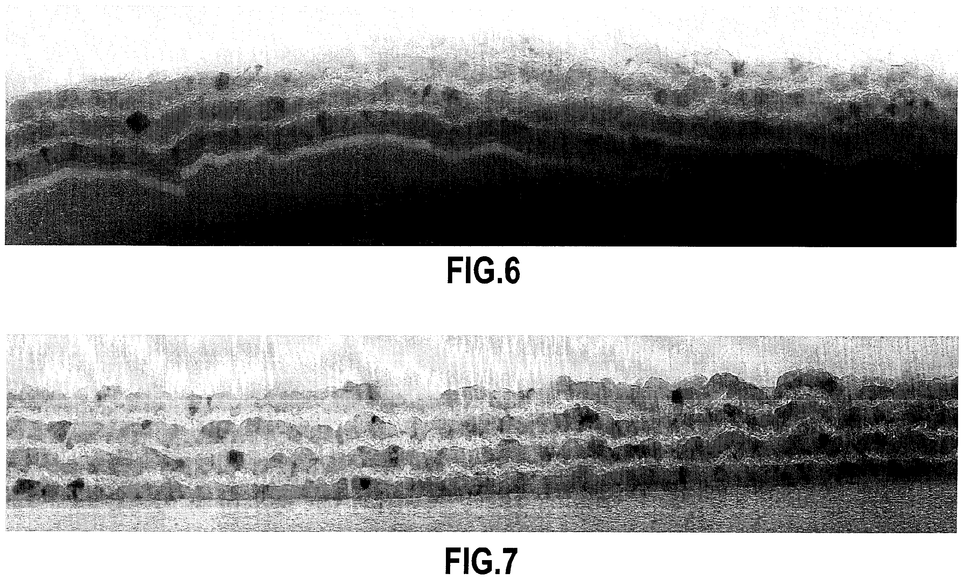

Les figures 6, 7 et 8 montrent que la couche de revêtement d'interphase formée en dernier (respectivement en coupe transversale, en coupe longitudinale et en surface) est formée de grains de SiC de dimension moyenne relativement faible et jointifs, ne conférant pas de rugosité significative.

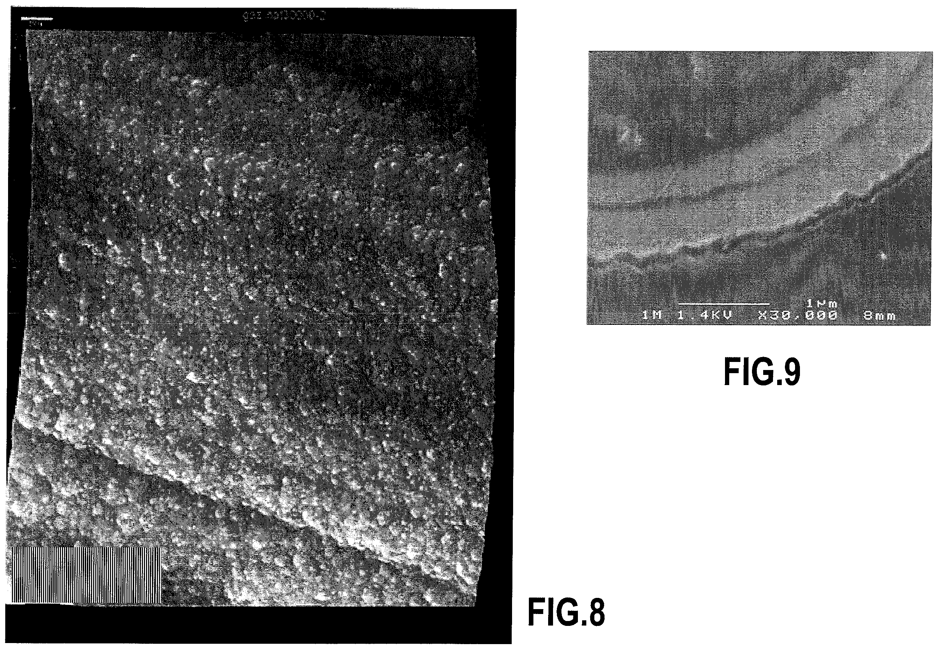

En comparant les figures 3 et 8 prises à la même échelle, on constate aisément la différence de taille des grains de SiC de la dernière couche de l'interphase. Par une analyse d'image appropriée on peut quantifier les tailles des grains.

### Exemple 6 (comparatif) (fibres C, interphase (PYC_{CH₄}-_{C₃H₈} /SiC)x2, matrice type PyC, B₄C, SiC, Si-B-C)

Il a été procédé comme dans l'exemple 3 sauf pour le revêtement d'interphase qui était de type (PyC/SiC) x 2 formé de deux couches de PyC alternant avec deux couches de SiC et avec des couches élémentaires de PyC obtenues par CVI classique avec une phase gazeuse dans laquelle le précurseur de PyC était un mélange de propane et de gaz naturel, le propane étant le principal précurseur.

L'épaisseur globale de l'interphase a été choisie de manière à être similaire à celle de l'exemple 3, suffisante pour consolider les préformes.

La figure 9 montre que la couche élémentaire externe de PyC présente une faible rugosité, les grains de SiC étant de relativement petite dimension et jointifs.

### Essais

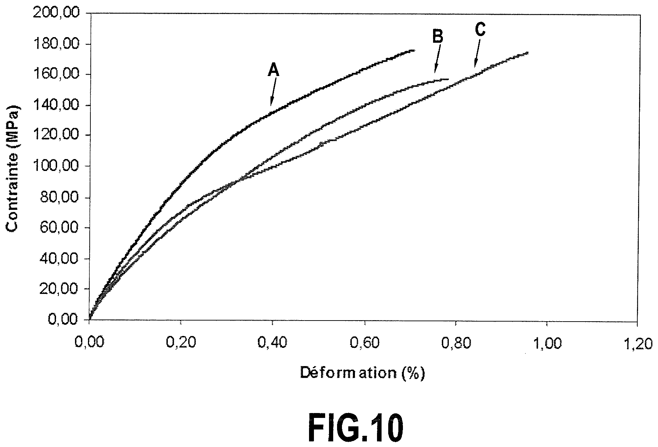

Des pièces obtenues selon les exemples 1, 3 et 6 ont été soumises à des essais en traction. Les courbes A, B et C de la figure 10 montrent la relation entre contrainte en traction et allongement relatif pour des pièces des exemples 1, 3 et 6, respectivement, jusqu'à rupture. La forme linéaire de la courbe C sur sa plus grande partie, jusqu'à rupture, traduit une décohésion entre revêtement d'interphase et matrice, donc un plus faible transfert de charge entre matrice et fibres.

Des pièces obtenues selon les exemples 1, 3 et 6 ont également été soumises à des essais de durée de vie en fatigue cyclique à 600°C et 1200°C sous air, ces essais consistant à soumettre les pièces à une contrainte de traction de 120 MPa (en contrainte apparente) avec une fréquence de relaxation de la contrainte de 0,25 Hz.

Le tableau ci-après indique les résultats obtenus.

| Pièce | Durée de vie à une température de : | |
|---|---|---|
| | 600°C | 1200°C |
| Exemple 1 | > 95 h | 35 h |
| Exemple 3 | > 77 h | 10 h |
| Exemple 6 | 26 h | 17 h |

La durée de vie des pièces obtenues selon les exemples 1 et 3 est bien supérieure à celle de la pièce obtenue selon l'exemple 6 à 600°C. A 1200°C, la durée de vie de la pièce obtenue selon l'exemple 3 est la plus faible, cela pouvant être expliqué par la plus grande sensibilité à l'oxydation du PyC obtenu à partir d'un précurseur gaz naturel.

Des pièces obtenues selon les exemples 2 et 4 ont été soumises à des essais de durée de vie en fatigue cyclique à 600°C dans les mêmes conditions que celles indiquées ci-dessus.

Le tableau ci-après indique les résultats obtenus.

| Pièce | Durée de vie à 600°C |
|---|---|
| Exemple 2 | > 74 h |
| Exemple 4 | 20 h |

On constate à 600°C un meilleur comportement de la pièce de l'exemple 2 que de la pièce selon l'exemple 4, induisant qu'avec des premières couches élémentaires d'interphase en BC, la présence de plusieurs couches de SiC est préférable, la couche de B₄C amorphe ne contribuant pas à de la génération de rugosité.

Des pièces selon les Exemples 2 et 5 ont été soumises à des essais de durée de vie en fatigue cyclique à 600°C dans les mêmes conditions que celles indiquées ci-dessus sauf pour la contrainte appliquée qui était de 90 MPa ou 130 MPa.

Le tableau ci-après indique les résultats obtenus.

| Pièce | Durée de vie à 600°C pour une contrainte de : | |
|---|---|---|
| | 90 MPa | 130 MPa |
| Exemple 2 | > 500 h | > 250 h |
| Exemple 5 | 288 h, 383 h, > 500 h | 87 h, 185 h |

On constate une dispersion importante des résultats obtenus avec des pièces selon l'exemple 5, ces résultats étant globalement très sensiblement inférieurs à ceux obtenus avec des pièces selon l'exemple 2, la différence tenant au choix du précurseur de carbone pour les couches élémentaires d'interphase en BC, à savoir le gaz naturel (ou méthane) dans le premier cas et le propane dans le deuxième cas.

Les exemples qui précèdent montrent qu'une rugosité de surface de la couche élémentaire en céramique formée en dernier dans le revêtement d'interphase propre à assurer un accrochage mécanique efficace avec la matrice peut être obtenue en réalisant le revêtement d'interphase dans des conditions favorisant, dans cette dernière couche, une croissance des grains de céramique plutôt que leur germination, alors que des conditions favorisant la germination plutôt que la croissance génèrent des grains relativement petits et rapprochés dont la croissance est vite bloquée par leur proximité.

## Revendications

1. Pièce en matériau composite à matrice céramique comprenant un renfort fibreux en fibres de carbone ou de céramique, et une matrice séquencée majoritairement en céramique comportant des premières couches de matrice en matériau déviateur de fissure alternant avec des deuxièmes couches de matrice en matériau céramique,
pièce dans laquelle un revêtement d'interphase est interposé entre les fibres et la matrice, le revêtement d'interphase adhérant aux fibres et à la matrice et étant formé d'au moins une séquence constituée d'une première couche élémentaire d'interphase en carbone dopé au bore surmontée d'une deuxième couche élémentaire d'interphase en céramique, la couche élémentaire externe du revêtement d'interphase étant une couche en céramique dont la surface externe est formée par des grains de céramique dont la taille est comprise essentiellement entre 20 nanomètres et 200 nanomètres, avec présence de grains de taille supérieure à 50 nanomètres conférant à la surface externe une rugosité assurant un accrochage mécanique avec la couche de matrice adjacente, le revêtement d'interphase étant formé de premières couches élémentaires en carbone dopé au bore alternant avec des deuxièmes couches élémentaires en céramique et le pourcentage atomique de bore étant compris entre 5% et 20% dans chaque première couche élémentaire, chaque deuxième couche élémentaire du revêtement d'interphase étant en carbure de silicium, la couche de matrice adjacente au revêtement d'interphase étant en matériau déviateur de fissures PyC ou BC.

2. Pièce selon la revendication 1, dans laquelle chaque première couche élémentaire du revêtement d'interphase a une épaisseur moyenne comprise entre 20 nanomètres et 500 nanomètres.

3. Pièce selon l'une quelconque des revendications 1 ou 2, dans laquelle chaque deuxième couche élémentaire du revêtement d'interphase a une épaisseur moyenne comprise entre 20 nanomètres et 500 nanomètres.

4. Pièce selon l'une quelconque des revendications 1 à 3, dans laquelle l'épaisseur moyenne totale du revêtement d'interphase est comprise entre 0,10 micromètres et 4 micromètres.

5. Procédé de fabrication d'une pièce selon l'une quelconque des revendications 1 à 4, le procédé comprenant :
- la réalisation d'une préforme fibreuse en fibres de carbone ou de céramique destinée à constituer le renfort fibreux de la pièce,
- la formation sur les fibres de la préforme, par infiltration chimique en phase gazeuse isobare, du revêtement d'interphase, la séquence étant constituée d'une première couche élémentaire en carbone pyrolytique dopé au bore surmontée de la deuxième couche élémentaire, chaque première couche élémentaire du revêtement d'interphase étant formée à partir d'une phase gazeuse dans laquelle le précurseur de carbone est du propane, et
- la densification de la préforme fibreuse revêtue du revêtement d'interphase par la matrice séquencée majoritairement en céramique.

## Patentansprüche

1. Teil aus Verbundmaterial mit keramischer Matrix, umfassend eine Faserverstärkung aus Kohlenstoff- oder Keramikfasern und eine sequentielle Matrix vorwiegend aus Keramik, die erste Matrixschichten aus einem rissumleitenden Material abwechselnd mit zweiten Matrixschichten aus Keramikmaterial umfasst,
wobei bei dem Teil eine Zwischenphasen-Beschichtung zwischen den Fasern und der Matrix angeordnet ist, wobei die Zwischenphasen-Beschichtung an den Fasern und an der Matrix haftet und aus zumindest einer Abfolge gebildet ist, die aus einer ersten, elementaren Zwischenphasenschicht aus mit Bor dotiertem Kohlenstoff, die auf eine zweite, elementare Zwischenphasenschicht aus Keramik aufgebracht ist, besteht, wobei die äußere elementare Schicht der Zwischenphasen-Beschichtung eine Schicht aus Keramik ist, deren äußere Oberfläche durch Keramikkörner gebildet wird, deren Größe im Wesentlichen zwischen 20 Nanometer und 200 Nanometer liegt, wobei das Vorliegen von Körnern mit einer Größe von mehr als 50 Nanometer der äußeren Oberfläche eine Rauigkeit verleiht, die eine mechanische Anhaftung an der benachbarten Matrixschicht sicherstellt, wobei die Zwischenphasen-Beschichtung aus ersten, elementaren Schichten aus mit Bor dotiertem Kohlenstoff gebildet ist, die sich mit zweiten elementaren Schichten aus Keramik abwechseln, und der atomare Prozentsatz von Bor in jeder ersten elementaren Schicht zwischen 5 % und 20 % liegt, wobei jede zweite elementare Schicht der Zwischenphasen-Beschichtung aus Siliziumkarbid besteht, wobei die Matrixschicht benachbart zu der Zwischenphasen-Beschichtung aus einem rissumleitenden Material PyC oder BC besteht.

2. Teil nach Anspruch 1, wobei jede erste elementare Schicht der Zwischenphasen-Beschichtung eine mittlere Dicke zwischen 20 Nanometer und 500 Nanometer aufweist.

3. Teil nach einem der Ansprüche 1 oder 2, wobei jede zweite elementare Schicht der Zwischenphasen-Beschichtung eine mittlere Dicke zwischen 20 Nanometer und 500 Nanometer aufweist.

4. Teil nach einem der Ansprüche 1 bis 3, wobei die mittlere Gesamtdicke der Zwischenphasen-Beschichtung zwischen 0,10 Mikrometer und 4 Mikrometer beträgt.

5. Verfahren zur Herstellung eines Teils nach einem der Ansprüche 1 bis 4, wobei das Verfahren umfasst:
- die Verwirklichung einer Faservorform aus Kohlenstoff- oder Keramikfasern, die dazu bestimmt ist, die Faserverstärkung des Teils zu bilden,
- die Ausbildung der Zwischenphasen-Beschichtung auf den Fasern der Vorform durch chemische Infiltration in isobarer Gasphase, wobei die Abfolge aus einer ersten elementaren Schicht aus mit Bor dotiertem pyrolytischem Kohlenstoff besteht, die auf die zweite elementare Schicht aufgebracht ist, wobei jede erste elementare Schicht der Zwischenphasen-Beschichtung aus einer Gasphase gebildet wird, wobei der Vorläufer des Kohlenstoffs Propan ist, und
- die Verdichtung der Faservorform, die mit der Zwischenphasen-Beschichtung beschichtet wurde, mit der sequentiellen Matrix vorwiegend aus Keramik.

## Claims

1. A part made of ceramic matrix composite material having fiber reinforcement of carbon or ceramic fibers and a majority-ceramic sequenced matrix having first matrix layers made of crack-deflector material alternating with second matrix layers made of ceramic material;
• in which part an interphase coating is interposed between the fibers and the matrix, the interphase coating adhering to the fibers and to the matrix and being formed of at least one sequence constituted by a first elementary interphase layer made of carbon doped with boron surmounted by a second elementary interphase layer made of ceramic, the outer elementary layer of the interphase coating being a ceramic layer having an outer surface formed by ceramic grains of size lying essentially in the range 20 nm to 200 nm, with the presence of grains of size greater than 50 nm conferring roughness on the outer surface ensuring mechanical attachment with the adjacent matrix layer, the interphase coating being made of first elementary layers of boron-doped carbon alternating with second elementary layers of ceramic, and in each first elementary layer, the atomic percentage of boron lies in the range 5% to 20%, each second elementary layer of the interphase coating being made of silicon carbide, the matrix layer adjacent to the interphase coating is made of PyC or BC crack-deflector material.

2. A part according to claim 1, wherein each first elementary layer of the interphase coating has mean thickness lying in the range 20 nm to 500 nm.

3. A part according to any one of claim 1 or 2, wherein each second elementary layer of the interphase coating has mean thickness lying in the range 20 nm to 500 nm.

4. A part according to any one of claims 1 to 3, wherein the total mean thickness of the interphase coating lies in the range 0.10 µm to 4 µm.

5. A method of manufacturing a part according to any one of claims 1 to 4, the method comprising:
- making a fiber preform made of carbon or ceramic fibers intended to constitute the fiber reinforcement of the part,
- forming on the fibers of the preform, by isobaric chemical vapor infiltration, the interphase coating, the sequence being constituted by a first elementary layer made of pyrolytic carbon doped with boron surmounted by the second elementary layer, each first elementary layer of the interphase coating being formed from a gaseous phase wherein the carbon precursor is propane, and
- densifying the fiber preform coated with the interphase coating by the majority-ceramic sequenced matrix.
